# EUROPEAN PATENT APPLICATION

(11) **EP 4 339 475 A1**
(43) Date of publication of application: **20.03.2024**
(21) Application number: 23193895.2
(22) Date of filing: 29.08.2023
(51) Int. Cl.: F16D 41/067, F16D 41/08, F16D 41/10, F16D 67/02

(54) **REVERSE INPUT BLOCKING CLUTCH**

(30) Priority: 08.09.2022 JP 2022143043
(71) Applicant: NTN Corporation, Osaka-shi Osaka 530-0005 (JP)
(72) Inventor: Itomi, Shoji, Kuwana-shi, 5118678 (JP)
(74) Representative: Grünecker Patent- und Rechtsanwälte PartG mbB

(57) **Abstract**

A locking-type reverse input blocking clutch is provided in which the number of components is reduced, and which can be assembled efficiently. Wedge-shaped spaces 12 are defined between an inner ring 3 constituting an output-side member and an outer ring 5 constituting a fixed member, and rollers (rolling elements) 11 are disposed in the respective wedge-shaped spaces 12. Pillars 9a of a cage and pillars 10a of an annular member are inserted such that each pillar 9a of the cage and a respective one of the pillars 10a of the annular member (i) radially overlap with each other at their distal end portions, and (ii) are circumferentially opposed to the corresponding adjacent two rollers 11. When reverse input torque is applied, the inner ring 3 rotates slightly, but the annular member does not rotate due to its rotational resistance to the outer ring 5. The rollers 11 stop while abutting against the pillars 10a of the annular member, move relative to the narrow portions of the respective wedge-shaped spaces 12, and engage with the inner ring 3 and the outer ring 5, so that the output-side member is locked and rotation is not transmitted. This structure does not require a large number of elastic members as mounted in conventional reverse input blocking clutches. Therefore, compared to conventional clutches, it is possible to reduce the number of components used, and assemble the clutch efficiently.

## Description

### TECHNICAL FIELD

The present invention relates to a reverse input blocking clutch that transmits rotation of an input-side member to an output-side member when input torque is applied, and that blocks rotation of the input-side member when reverse input torque is applied.

### BACKGROUND ART

Reverse input blocking clutches transmit rotation of an input-side member to an output-side member when input torque is applied to the input-side member, and block rotation of the input-side member when reverse input torque is applied to the output-side member. Such reverse input blocking clutches include a "locking-type" reverse input blocking clutch, of which the output-side member is locked when reverse input torque is applied.

As a locking-type reverse input blocking clutch, there is a clutch including an input-side member and an output-side member disposed to be rotatable about a common center axis; a torque transmission means for transmitting rotation of the input-side member to the output-side member, the torque transmission means being disposed between the input-side member and the output-side member; and a fixed member having a cylindrical surface on its inner periphery, and disposed radially outwardly of the output-side member, wherein the output-side member has a plurality of cam surfaces disposed on its outer peripheral surface such that a wedge-shaped space that gradually narrows toward both circumferential sides is defined between each cam surface of the output-side member and the cylindrical surface of the fixed member on its inner periphery, wherein each rolling element is disposed in a respective one of the wedge-shaped spaces, wherein a cage having pillars inserted to be circumferentially opposed to the rolling elements is coupled to the input-side member so as to be rotatable in unison with the input-side member, and wherein a pair of elastic members are disposed on both circumferential sides of each rolling element so as to be supported by the pillars of the cage and to retain the rolling element at the wide portion of the wedge-shaped space (e.g., see the below-identified Patent Document 1).

In the reverse input blocking clutch having the above structure, when reverse input torque is applied to the output-side member, due to slight rotation of the output-side member, the rolling elements, retained by the cage and the respective pairs of elastic members so as to remain stationary, move relative to the narrow portions of the wedge-shaped spaces, and engage with the output-side member and the fixed member, so that the output-side member is locked and the input-side member also does not rotate.

On the other hand, when input torque is applied to the input-side member, even if the output-side member is in its locked state (even if the rolling elements are engaged with the output-side member and the fixed member at the narrow portions of the wedge-shaped spaces), the pillars of the cage, rotating in unison with the input-side member, push out, via the elastic members, the rolling elements toward the wide portions of the wedge-shaped spaces, so that the locked state of the output-side member is released, and then rotation is transmitted from the input-side member to the output-side member by the torque transmission means.

While, in the above reverse input blocking clutch, elastic members are disposed on both circumferential sides of each rolling element, in the reverse input blocking clutch of the below-identified Patent Document 2, a spring assembly is used which is constituted by combining together (i) a spring (elastic member retaining rolling elements) made of metal and integrally formed with spring pieces disposed on both circumferential sides of each rolling element; and (ii) an auxiliary member for engagement made of resin.

### PRIOR ART DOCUMENTS

### PATENT DOCUMENTS

Patent document 1: Japanese Patent No. 2713601 (Fig. 7)
Patent document 2: Japanese Patent No. 4621156

### SUMMARY OF THE INVENTION

### PROBLEMS TO BE SOLVED BY THE INVENTION

The reverse input blocking clutch of Patent Document 1, in which elastic members are disposed on both circumferential sides of each rolling element, has a problem in that elastic members of which the number is twice the number of the rolling elements are required, and thus the number of components used increases, and also in that if normally assumed coil springs are used as the elastic members, when assembling the clutch, it is required to compress and deform each pair of coil springs to be inserted on both circumferential sides of the rolling element, and thus it takes time to assemble the clutch.

On the other hand, for the reverse input blocking clutch of Patent Document 2, since two members (i.e., the spring and the auxiliary member) retain all of the rolling elements, the number of components used decreases compared to the clutch in which an elastic member is disposed on each circumferential side of each rolling element.

However, the spring pieces of the spring assembly are formed of a leaf spring, a change in stress relative to the amount of deformation is large, and a large stroke cannot be ensured to press the rolling elements. Therefore, operation of the clutch could become unstable. Also, while the metal spring of the spring assembly has an integral structure, when assembling the clutch, as with coil springs, it is necessary to compress and deform many spring pieces to insert each adjacent pair of spring pieces on both circumferential side of the rolling element. Therefore, the clutch of Patent Document 2 still has a problem in assemblability.

It is therefore an object of the present invention to provide a locking-type reverse input blocking clutch in which the number of components is reduced, and which can be assembled efficiently.

### MEANS FOR SOLVING THE PROBLEMS

In order to achieve the above object, the present invention provides a reverse input blocking clutch comprising: an input-side member and an output-side member disposed to be rotatable about a common center axis; a torque transmission means for transmitting rotation of the input-side member to the output-side member; a fixed member disposed radially outwardly of the output-side member; a cage coupled to the input-side member so as to be rotatable in unison with the input-side member; and plural rolling elements and an annular member that are disposed between the output-side member and the fixed member; wherein a cylindrical surface is disposed on an inner periphery of the fixed member, and plural cam surfaces are circumferentially disposed on an outer peripheral surface of the output-side member such that wedge-shaped spaces each having a narrow portion on at least one circumferential side are defined between the cylindrical surface of the fixed member on the inner periphery thereof and the respective cam surfaces of the output-side member, wherein each of the rolling elements is disposed in a respective one of the wedge-shaped spaces, wherein pillars of the cage and pillars of the annular member are inserted such that each of the pillars of the cage and a respective one of the pillars of the annular member (i) radially overlap with each other, and (ii) are circumferentially opposed to corresponding ones of the rolling elements, and wherein the reverse input blocking clutch is configured such that when reverse input torque is applied to the output-side member, and the output-side member rotates slightly, due to rotational resistance of the annular member to the fixed member, the rolling elements abutting against the respective pillars of the annular member move relative to the narrow portions of the respective wedge-shaped spaces, and engage with the output-side member and the fixed member, so that the output-side member is locked and the input-side member does not rotate (arrangement 1).

In the above arrangement 1, since elastic members as mounted in the above conventional reverse input blocking clutch are not used, and a single annular member alone is used instead, compared to the conventional clutch, it is possible to reduce the number of components used, and stabilize operation of the clutch. Also, since, when mounting the annular member, it is only required to insert the pillars of the annular member to be circumferentially opposed to the rolling elements, it is possible to avoid time-consuming work as required when mounting elastic members in the conventional clutch, and thus assemble the clutch efficiently.

In the above arrangement 1, the rotational resistance of the annular member to the fixed member is desirably generated by viscous resistance of a lubricant entering a space between the annular member and an inner peripheral surface of the fixed member (arrangement 2). In this case, the lubricant preferably comprises grease having a worked penetration of 350 or less and a base oil kinematic viscosity of 100 cSt or more (arrangement 3). If, in the above arrangement 2 or 3, the lubricant is sealed in an interior space of the clutch so as to account for 50 to 100% of a volume of the interior space (arrangement 4), it is possible to generate sufficient rotational resistance at the annular member.

In any of the above arrangements 1 to 4, if the fixed member includes a lid portion for preventing the annular member from being axially pulled out, and the reverse input blocking clutch further comprises an elastic member disposed between the lid portion of the fixed member and the annular member, and axially pressing the annular member against the cage (arrangement 5), it is possible to increase the rotational resistance of the annular member to the fixed member, and lock the output-side member more reliably when reverse input torque is applied. Since, unlike elastic members as used in the conventional reverse input blocking clutch, it is not necessary to mount the elastic member of arrangement 5 while pressing the rolling elements, assemblability of the entire clutch does not decrease. The elastic member of arrangement 5 may comprise a coil spring (arrangement 6).

In any of the above arrangements 1 to 6, each of the cam surfaces of the output-side member may comprise two convex curved surface portions or a single concave curved surface (arrangement 7). If each cam surface comprises a single concave curved surface, it is possible to reduce the contact surface pressure between the rolling element and the cam surface, and thus increase the allowable torque value when the output-side member is locked.

In any of the above arrangements 1 to 7, since the annular member has a somewhat complicated shape, the annular member is preferably formed of a resin material (arrangement 8). The resin material may be a synthetic resin alone or a synthetic resin containing a reinforcing material.

### EFFECTS OF THE INVENTION

For the reverse input blocking clutch of the present invention, as described above, elastic members for retaining the rolling elements as used in the conventional clutch are not used, the pillars of the annular member are inserted to be circumferentially opposed to the rolling elements and, due to the rotational resistance of the annular member, the output-side member is locked when reverse input torque is applied. Therefore, compared to the conventional clutches, it is possible to reduce the number of components used, and assemble the clutch efficiently.

### BRIEF DESCRIPTION OF THE DRAWINGS

Fig. 1 is a vertical sectional front view of a reverse input blocking clutch according to a first embodiment of the present invention.
Fig. 2 is a sectional view taken along line II-II of Fig. 1.
Fig. 3 is an exploded perspective view of the reverse input blocking clutch of Fig. 1.
Fig. 4 is a right side view of the cage of Fig. 1.
Fig. 5 is a left side view of the annular member of Fig. 1.
Fig. 6A is a sectional view corresponding to Fig. 2, and illustrating operation of the clutch when input torque is applied.
Fig. 6B is a sectional view corresponding to Fig. 2, and illustrating operation of the clutch when input torque is applied.
Fig. 7A is a sectional view illustrating operation of the clutch when reverse input torque is applied in the state of Fig. 6B.
Fig. 7B is a sectional view illustrating operation of the clutch when reverse input torque is applied in the state of Fig. 6B.
Fig. 8 is a sectional view illustrating operation of the clutch when input torque is applied in the state of Fig. 7B.
Fig. 9 is a sectional view corresponding to Fig. 2, and illustrating a variation of cam surfaces of an output-side member.
Fig. 10A a vertical sectional front view of a reverse input blocking clutch according to a second embodiment of the present invention.
Fig. 10B is an exploded perspective view of a portion of the clutch of Fig. 10A.

### BEST MODE FOR CARRYING OUT THE INVENTION

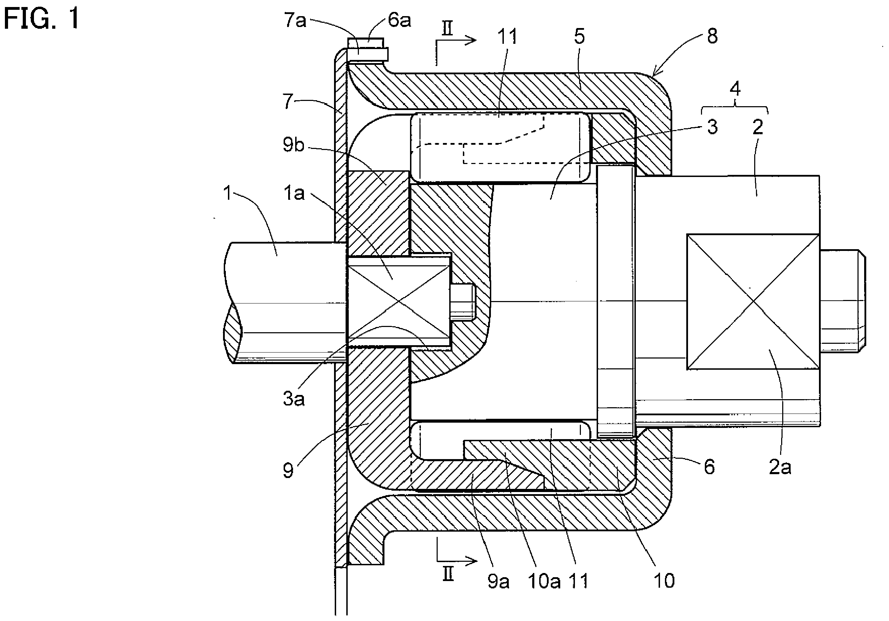

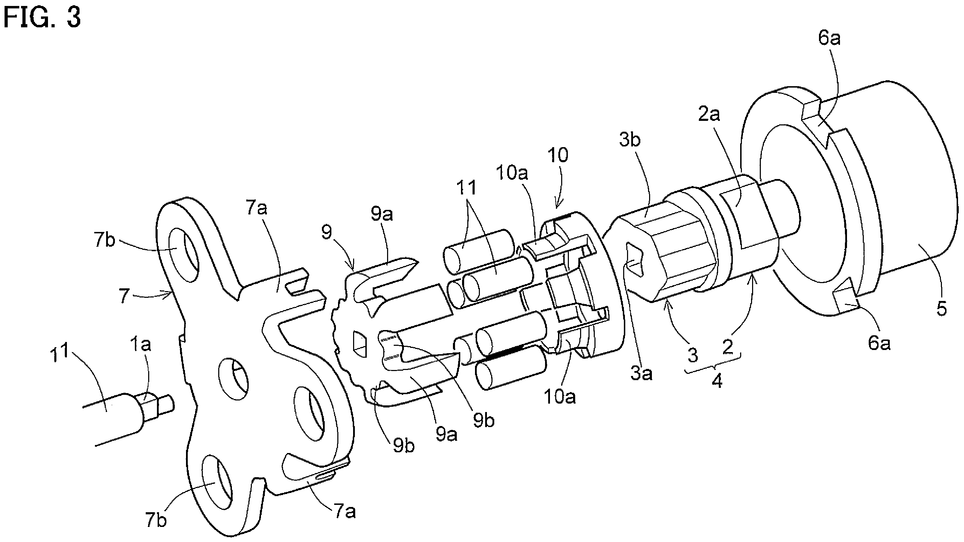

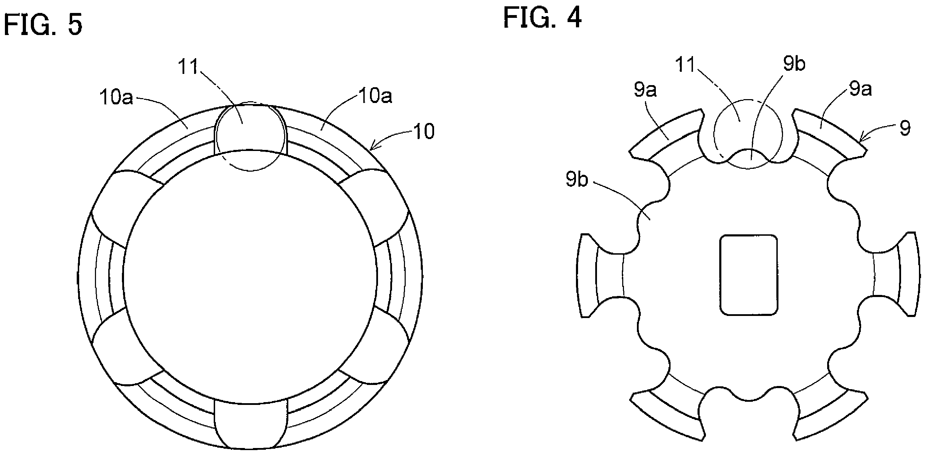

The first and second embodiments of the present invention are described below with reference to the drawings. Figs. 1 to 9 illustrate a reverse input blocking clutch according to the first embodiment. As illustrated in Figs. 1 to 5, this reverse input blocking clutch is constituted by an input shaft (input-side member) 1; an output-side member 4 comprising an output shaft 2 and an inner ring 3 that are integrally formed; a fixed member 8 comprising (i) a housing 6 integrally formed with an outer ring 5 disposed radially outwardly of the inner ring 3, and (ii) a pressing lid 7 through which the input shaft 1 is inserted; a cage 9 having a plurality of pillars 9a inserted between the inner ring 3 and the outer ring 5 at one axial end portion; an annular member 10 having a plurality of pillars 10a inserted between the inner ring 3 and the outer ring 5 at the other axial end portion; and cylindrical rollers 11, as a plurality of rolling elements, disposed between the inner ring 3 and the outer ring 5.

The fixed member 8 has a plurality of claws 7a on the outer peripheral edge of the pressing lid 7. The pressing lid 7 is fixed to the housing 6 by (i) fitting the claws 7a into respective cutouts 6a formed in the outer peripheral edge of a flange of the housing 6 at the one end thereof; and (ii) folding the claws 7a. The housing 6 includes, at the other end thereof, a lid portion for preventing the annular member 10 from being axially pulled out. The output shaft 2 is rotatably supported by the inner peripheral surface of the lid portion of the housing 6, and the input shaft 1 is rotatably supported by the inner peripheral surface of the retaining lid 7. The pressing lid 7 includes three tongue-shaped protruding portions protruding from the outer periphery thereof, and having, respectively, attachment holes 7b for fixing the fixed member 8 to an external member (not shown).

The input shaft 1 includes an engagement portion 1a having substantially a track-shaped cross section; and a small-diameter cylindrical portion protruding from the distal end of the engagement portion 1a. The front portion of the engagement portion 1a is inserted in an engagement hole 3a disposed in the center of the inner ring 3, and the small-diameter cylindrical portion is fitted in a small hole formed in the deep portion of the engagement hole 3a such that the input shaft 1 is rotatable about the same center axis as the output-side member 4. The engagement hole 3a of the inner ring 3 is formed such that with the input shaft 1 inserted in the engagement hole 3a, a slight gap in the rotation direction is defined. This arrangement constitutes a torque transmission means for transmitting rotation of the input shaft 1 to the output-side member 4 with a slight angular delay. The cage 9 is fitted to the rear portion of the engagement portion 1a of the input shaft 1 with no gap defined therebetween, whereby the input shaft 1 and the cage 9 are rotatable in unison.

The output shaft 2 of the output-side member 4 has, on its outer peripheral surface, two parallel-extending flat surfaces 2a for transmitting rotation to an external rotary member (not shown).

The inner ring 3 of the output-side member 4 has, on its outer peripheral surface, plural circumferentially disposed cam surfaces 3b each comprising two convex curved surface portions, and radially opposed to a cylindrical surface of the outer ring 5 on its inner periphery. A wedge-shaped space 12 that gradually narrows toward both circumferential sides thereof is defined between each cam surface 3b and the cylindrical surface of the outer ring 5 on its inner periphery. Each roller 11 is disposed in a respective one of the wedge-shaped spaces 12. The pillars 9a of the cage 9 and the pillars 10a of the annular member 10 are inserted such that each pillar 9a and the corresponding pillar 10a are circumferentially opposed to the corresponding adjacent two rollers 11.

Each pillar 9a of the cage 9 extends toward the other axial end of the clutch beyond the axial center of the roller 11, and the inner peripheral surface of the pillar 9a at its distal end is tapered. Also, the cage 9 includes, on the outer periphery of its annular body, radially extending protrusions 9b each located between the circumferentially adjacent pair of pillars 9a, and preventing the rollers 11 from falling off toward the one axial end of the clutch.

Each pillar 10a of the annular member 10 is located radially inwardly of the pillar 9a of the cage 9, and extends toward the one axial end of the clutch beyond the axial center of the roller 11. The longitudinal central portion of the pillar 10a has a tapered outer peripheral surface along the tapered surface of the inner periphery of the cage pillar 9a. The length of the portion of the pillar 10a opposed to the roller 11 is preferably not less than 70% of the length of the roller 11. This is because when, as described later, the roller 11 abutting against the pillar 10a of the annular member 10 moves, relative to the narrow portion of the wedge-shaped space 12, and engages with the cam surface 3b of the inner ring 3, the longer the portion of the pillar 10a opposed to the roller 11, the less likely skew (circumferential inclination) of the roller 11 is to occur, so that the clutch operates stably.

The annular member 10 has a somewhat complicated shape, and thus is preferably formed by injection molding of a resin material. The resin material may be a synthetic resin alone, or a synthetic resin containing, as a reinforcing material, glass fiber, carbon fiber, potassium titanate fiber, etc. to obtain a strength enough to prevent plastic deformation of the annular member 10 due to the forces applied from the rollers 11.

The outer and inner diameters of the annular member 10 are set such that the radial gap So between the outer peripheral surface of the annular member 10 and the inner peripheral surface of the outer ring 5 is smaller than the radial gap Si between the inner peripheral surface of the annular member 10 and the cam surfaces 3b of the inner ring 3 (i.e., So < Si).

Grease (not shown) as a lubricant is sealed in the interior space of the clutch (inward of the fixed member 8) so as to account for 50 to 100% of its volume, and the contact portions of the rollers 11 with other components, and the sliding portions of components relative to each other are lubricated by the grease. The grease used has a worked penetration of 350 or less, and a base oil kinematic viscosity of 100 cSt or more. The grease enters the space between the annular member 10 and the inner peripheral surface of the outer ring 5, and the space between the annular member 10 and the outer peripheral surface of the inner ring 3, and the rotational resistance of the annular member 10 to the outer ring 5 and the inner ring 3 is generated by the viscous resistance of the grease. Since, as described above, So (radial gap between the annular member 10 and the outer ring 5) < Si (radial gap between the annular member 10 and the inner ring 3) is satisfied., the rotational resistance To of the annular member 10 to the outer ring 5 is larger than the rotational resistance Ti of the annular member 10 to the inner ring 3, i.e., To > Ti is satisfied.

While he radial gap So (between the annular member 10 and the outer ring 5) and the radial gap Si (between the annular member 10 and the inner ring 3) can be appropriately set, the radial gap So is preferably 20 µm or more and 100 µm or less, and the radial gap Si is preferably more than 100 µm.

Next, the operation of the entire reverse input blocking clutch of the present invention is described.

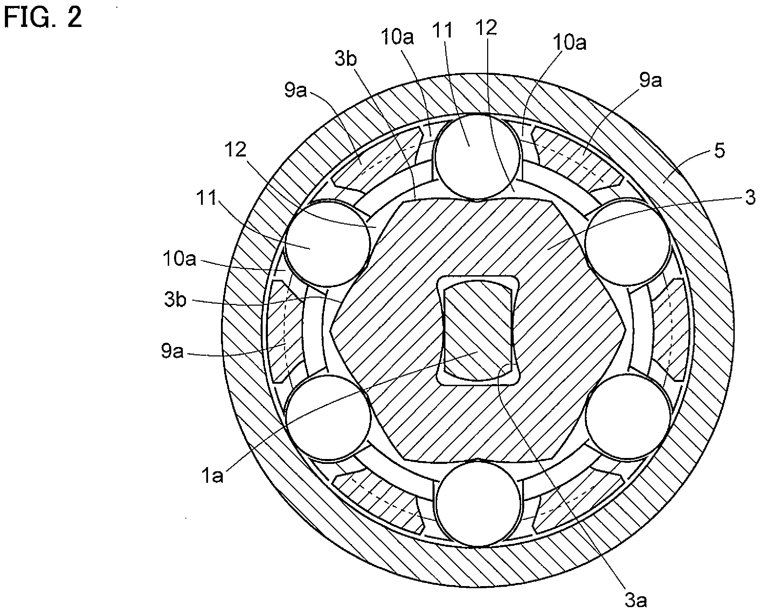

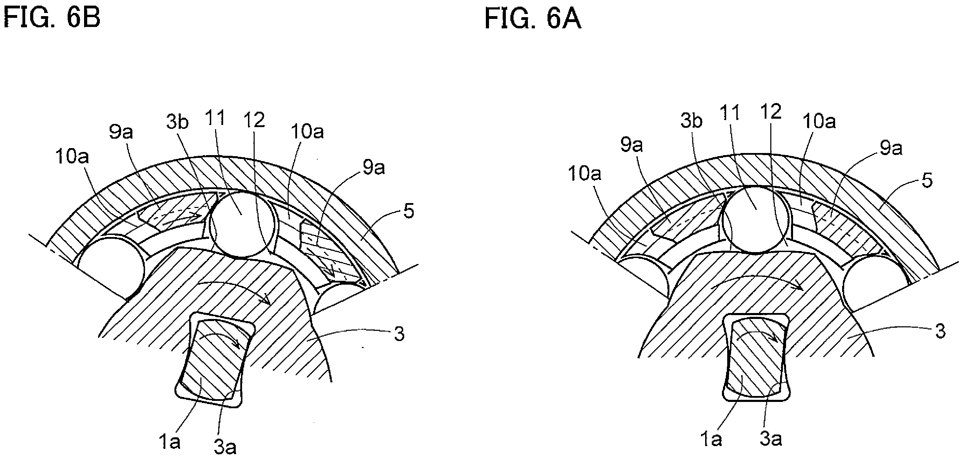

First, when the clutch is assembled, the rollers 11 are located at the wide portions of the respective wedge-shaped spaces 12 as illustrated in Fig. 2. When, in this state, input torque is applied to the input shaft 1, after, as illustrated in Fig. 6A, the pillars 9a of the cage 9, which rotates in unison with the input shaft 1, approach the respective rollers 11, and the engagement portion 1a of the input shaft 1 engages in the engagement hole 3a of the inner ring 3, rotation of the input shaft 1 is transmitted to the output-side member 4 (the inner ring 3 and the output shaft 2) as illustrated in Fig. 6B.

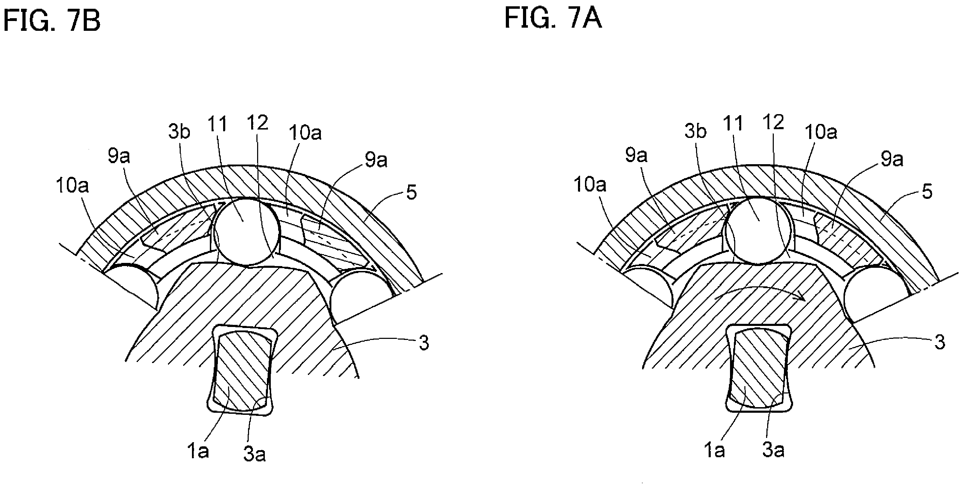

Then, when, in the rotation transmission state shown in Fig. 6B, the input shaft 1 stops and reverse input torque is applied to the output shaft 2 and the inner ring 3 as illustrated in Fig. 7A, the output shaft 2 and the inner ring 3 rotate slightly as illustrated in Fig. 7B, but since the rotational resistance To of the annular member 10 to the outer ring 5 is larger than the rotational resistance Ti of the annular member 10 to the inner ring 3, the annular member 10 does not rotate and remains at the current position. When, with the rollers 11 stopped while abutting against the pillars 10a of the annular member 10, the rollers 11 move relative to the narrow portions of the wedge-shaped spaces 12, and engage with the inner ring 3 and the outer ring 5, the output-side member 4 is locked and rotation is not transmitted from the output-side member 4 to the input shaft 1.

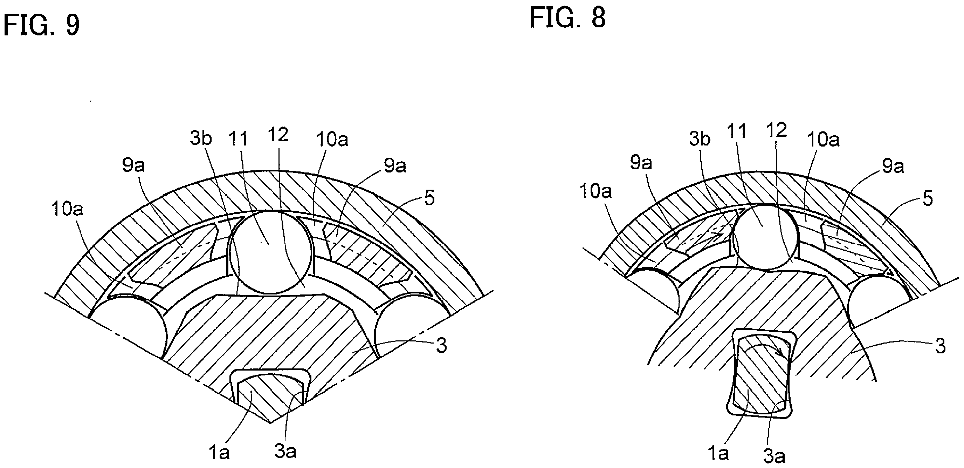

When, in the locked state shown in Fig. 7B, input torque is applied to the input shaft 1 as illustrated in Fig. 8, and the input shaft 1 rotates slightly, the pillars 9a of the cage 9 push out the rollers 11 to the wide portions of the wedge-shaped spaces 12, so that the rollers 11 are disengaged from the inner ring 3 and the outer ring 5, the state of the clutch becomes the above-described state of Fig. 6A, and the output-side member 4 is unlocked. When, thereafter, the input shaft 1 further rotates, the state of the clutch becomes the above-described state of Fig. 6B, and rotation is transmitted from the input shaft 1 to the output-side member 4.

In the reverse input blocking clutch having the above structure, since the pillars 10a of the annular member 10 are each inserted to be circumferentially opposed to the corresponding adjacent two rollers 11, and, due to the rotational resistance of the annular member 10, the output-side member 4 is locked when reverse input torque is applied, a large number of elastic members for retaining the rollers are not necessary. Due to the omission of elastic members, compared to conventional clutches, it is possible to reduce the number of components used and the cost, and assemble the clutch efficiently. In addition, it is possible to stabilize operation of the clutch, and mount many rollers, thereby increasing the allowable torque value when the output-side member is locked.

Each cam surface 3b of the inner ring 3 comprises two convex curved surface portions in the above embodiment, but may comprise a single concave curved surface as in the variation of Fig. 9. By forming each cam surface 3b as a single concave curved surface, it is possible to reduce the contact surface pressure between the rollers 11 and the cam surfaces 3b, and thus further increase the allowable torque value.

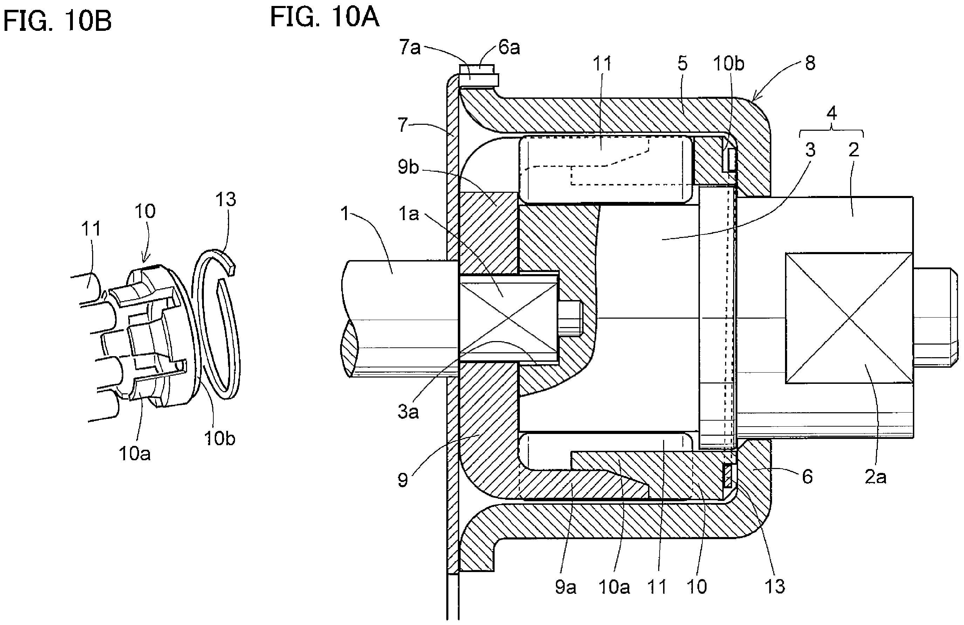

Fig. 10 illustrates a reverse input blocking clutch according to the second embodiment of the present invention. The clutch of the second embodiment is based on the clutch of the first embodiment, but different therefrom in that an annular recess 10b is disposed in the surface of the annular member 10 opposed to the lid portion of the housing 6, and a coil spring 13 comprising an elastic member and wound around its center axis by one turn is mounted in the recess 10b in a compressed state.

In the second embodiment, since the coil spring 13 axially presses the annular member 10 such that its pillars 10a are pressed against the respective pillars 9a of the cage 9, the rotational resistance of the annular member 10 to the fixed member 8 is larger than in the first embodiment, so that when reverse input torque is applied, the output-side member 4 is locked more reliably. Instead of the coil spring 13, a coil spring wound around its center axis by two turns or more, or a different type of elastic member may be used.

The above-described embodiments are mere examples in every respect, and the present invention is not limited thereto. The scope of the present invention is indicated not by the above description but by the claims, and should be understood to include all modifications within the meaning and scope equivalent to the scope of the claims.

### DESCRIPTION OF REFERENCE NUMERALS

1: Input shaft (input-side member)
1a: Engagement portion
2: Output shaft
3: Inner ring
3a: Engagement hole
3b: Cam surface
4: Output-side member
5: Outer ring
6: Housing
7: Pressing lid
8: Fixed member
9: Cage
9a: Pillar
10: Annular member
10a: Pillar
11: Roller (rolling element)
12: Wedge-shaped space
13: Coil spring (elastic member)

## Claims

1. A reverse input blocking clutch comprising:
an input-side member (1) and an output-side member (4) disposed to be rotatable about a common center axis;
a torque transmission means for transmitting rotation of the input-side member (1) to the output-side member (4);
a fixed member (8) disposed radially outwardly of the output-side member (4);
a cage (9) coupled to the input-side member (1) so as to be rotatable in unison with the input-side member (1); and
plural rolling elements (11) and an annular member (10) that are disposed between the output-side member (4) and the fixed member (8);
wherein a cylindrical surface is disposed on an inner periphery of the fixed member (8), and plural cam surfaces (3b) are circumferentially disposed on an outer peripheral surface of the output-side member (4) such that wedge-shaped spaces (12) each having a narrow portion on at least one circumferential side are defined between the cylindrical surface of the fixed member (8) on the inner periphery thereof and the respective cam surfaces (3b) of the output-side member (4),
wherein each of the rolling elements (11) is disposed in a respective one of the wedge-shaped spaces (12),
wherein pillars (9a) of the cage (9) and pillars (10a) of the annular member (10) are inserted such that each of the pillars (9a) of the cage (9) and a respective one of the pillars (10a) of the annular member (10) (i) radially overlap with each other, and (ii) are circumferentially opposed to corresponding ones of the rolling elements (11), and
wherein the reverse input blocking clutch is configured such that when reverse input torque is applied to the output-side member (4), and the output-side member (4) rotates slightly, due to rotational resistance of the annular member (10) to the fixed member (8), the rolling elements (11) abutting against the respective pillars (10a) of the annular member (10) move relative to the narrow portions of the respective wedge-shaped spaces (12), and engage with the output-side member (4) and the fixed member (8), so that the output-side member (4) is locked and the input-side member (1) does not rotate.

2. The reverse input blocking clutch according to claim 1, wherein the rotational resistance of the annular member (10) to the fixed member (8) is generated by viscous resistance of a lubricant entering a space between the annular member (10) and an inner peripheral surface of the fixed member (8).

3. The reverse input blocking clutch according to claim 2, wherein the lubricant comprises grease having a worked penetration of 350 or less and a base oil kinematic viscosity of 100 cSt or more.

4. The reverse input blocking clutch according to claim 2, wherein the lubricant is sealed in an interior space of the clutch so as to account for 50 to 100% of a volume of the interior space.

5. The reverse input blocking clutch according to any one of claims 1 to 4, wherein the fixed member (8) includes a lid portion for preventing the annular member (10) from being axially pulled out, and
wherein the reverse input blocking clutch further comprises an elastic member (13) disposed between the lid portion of the fixed member (8) and the annular member (10), and axially pressing the annular member (10) against the cage (9).

6. The reverse input blocking clutch according to claim 5, wherein the elastic member (13) comprises a coil spring.

7. The reverse input blocking clutch according to any one of claims 1 to 6, wherein each of the cam surfaces (3b) of the output-side member (4) comprises two convex curved surface portions or a single concave curved surface.

8. The reverse input blocking clutch according to any one of claims 1 to 7, wherein the annular member (10) is formed of a resin material.
